# EUROPÄISCHE PATENTSCHRIFT

(11) **EP 1 009 222 B1**
(45) Veröffentlichungstag und Bekanntmachung des Hinweises auf die Patenterteilung: **07.05.2003**
(21) Anmeldenummer: 98947457.2
(22) Anmeldetag: 26.08.1998
(51) Int. Cl.: A01K 1/015, F24D 3/16

(54) **FUSSBODENHEIZUNG**
FLOOR HEATER
DISPOSITIF DE CHAUFFAGE AU SOL

(30) Priorität: 27.08.1997 DE 19737367
(43) Veröffentlichungstag der Anmeldung: 21.06.2000
(73) Patentinhaber: Durotec Stallbauelemente GmbH, 24755 Rendsburg (DE)
(72) Erfinder: HINRICHS, Thorsten, D-25795 Weddingstedt (DE)
(74) Vertreter: Bohnenberger, Johannes, Dr.
(86) Internationale Anmeldenummer: EP9805416
(87) Internationale Veröffentlichungsnummer: WO99009811

(56) Entgegenhaltungen:
- EP-A- 0 259 910
- DE-A- 2 840 395
- DE-A- 3 215 902
- DE-A- 3 241 743
- DE-C- 4 443 931
- US-A- 4 566 235
- US-A- 5 092 271

## Beschreibung

Die vorliegende Erfindung betrifft eine Füßbodenheizung für Tierställe mit Heizrohre aufweisenden Heizelementen, nach dem Oberbegriff des Anspruchs 1. Eine solche Fußbodenheizung ist aus der DE-A-2 840 395 bekannt.

Fußbodenheizunge sind heute weitverbreitet und weisen in Form von Heizschlangen verlegte Heizrohre auf. Diese Heizrohre sind üblicherweise aus Kunststoff ausgebildet und werden am vorgesehenen Einbauort der Fußbodenheizung zum Verlegen von einer Rolle abgewickelt. Auf dem unter anderem durch Aufbringen einer Isolierschicht entsprechend vorbereiteten Rohboden werden die Heizrohre dann auf der Isolierschicht in Form der vorgesehenen Heizschlangen verlegt und auf der Isolierschicht beispielsweise mit Klammern befestigt. Auf diesen Heizschlangen wird dann der Fertigfußboden in Form von Estrichbeton aufgebracht, wobei vor dem Aufbringen des Estriches noch eine Folie über die Heizschlangen gelegt werden kann, damit der Estrich keinen direkten Kontakt mit den Heizrohren aufweist. Nachdem der Estrich ausgetrocknet ist und die Heizrohre an die Zu- bzw. Abläufe angeschlossen wurden, ist die Fußbodenheizung betriebsbereit und kann durch Regeln der Durchflußmenge des Heizwassers auf die gewünschte Temperatur eingestellt werden.

Es sind aber auch Fußbodenheizungen mit Heizrohre aufweisenden Heizelementen bekannt, bei denen die Heizelemente vorgefertigt und am vorgesehenen Einbauort zu einer Fußbodenheizung zusammengefügt werden. Hierbei werden die Heizelemente als komplettes Fertigbauteil vorgefertigt und enthalten die Heizrohre sowie auf der Unterseite eine integrierte Wärmedämmung, um Wärmeverluste zu minimieren. Am vorgesehenen Einbauort werden die einzelnen, in den verlegten Heizelementen integrierten Heizrohre durch Verbindungsmittel wie beispielsweise Anschlußfittings strömungsverbunden, so daß eine funktionsfähige Fußbodenheizung gebildet wird.

Eine solche Fußbodenheizung mit Heizrohre aufweisenden Heizelementen könnte beispielsweise auch in Schweineställen verwendet werden. Die Böden der Schweineställe sind üblicherweise als perforierte, mittels Unterzügen freitragend über Güllekanälen angeordnete Böden ausgebildet. Die Heizelemente können dann beispielsweise so zusammengefügt werden, daß sie eine den Schweinestall teilweise durchziehende Heizleiste bilden und in den perforierten Boden integriert sind, oder sie können nur begrenzt örtlich zusammengefügt und in den perforierten Boden integriert werden, um beispielsweise sogenannte "Ferkelnester" zu erwärmen.

Eine derartige Ausbildung einer Fußbodenheizung mit örtlich begrenzten Heizflächen ist in einem Schweinestall vorteilhaft, da dort die Schweine abhängig von ihrem Alter jeweils andere Temperaturen als angenehm empfinden. So empfindet das Saugferkel höhere Temperaturen als angenehm als das Aufzuchtferkel, welches wiederum höhere Temperaturen als angenehm empfindet, wie das Mastschwein. Beispielsweise empfindet das Saugferkel Temperaturen zwischen 38° und 40°C als angenehm, während für eine laktierende Muttersau Temperaturen zwischen 15° und 18°C optimal sind. Durch die örtlich begrenzten Heizflächen werden nun beispielsweise für die Saugferkel besonders angenehme Temperaturfelder geschaffen, in denen sich diese dann bevorzugt aufhalten, was zu deren Wohlbefinden und damit zu deren gesundem Wachstum beiträgt.

Die Verwendung einer Fußbodenheizung mit Heizrohre aufweisenden Heizelementen in örtlich begrenzten Bereichen des perforierten Bodens weist jedoch eine Reihe von Nachteilen auf. So sind beispielsweise zusätzliche Raumheizkörper erforderlich, um auf die für die Tiere erforderliche Raumtemperatur zu kommen, da die vorhandenen Heizelemente der Fußbodenheizung für eine Heizung des kompletten Schweinestalles nicht ausreichen. Eine Anordnung zusätzlicher Heizelemente in dem perforierten Boden ist hier nicht möglich, da dieser dann nicht mehr genügend Öffnungen aufweisen würde, um die von den Schweinen ausgeschiedenen Exkremente in die darunter angeordneten Güllekanäle führen zu können. Weiterhin werden durch die Notwendigkeit zusätzlicher Raumheizkörper der Montageaufwand und damit die Kosten erhöht, so daß ein derartiger Schweinestall im Aufbau aufwendiger und teurer wird. Aber auch im Betrieb ist einer mit einer derartigen Fußbodenheizung ausgebildeter Schweinestall teurer, da hier die Heizkosten wegen des schlechten Wirkungsgrades höher sind. Der schlechte Wirkungsgrad resultiert aus der Tatsache, daß die einzelnen Heizelemente der Fußbodenheizung mit Anschlußfittings verbunden werden müssen, welche einen gewissen Strömungswiderstand aufweisen und folglich das Strömungsverhalten des Heizwassers wegen ihrer großen Anzahl und ihrer Anordnung in Reihe negativ beeinflussen. Zur Überwindung dieses resultierenden großen Strömungswiderstandes ist dann eine größere Pumpe erforderlich, die zum einen in der Anschaffung teurer ist und zum anderen im Betrieb eine höhere Leistungsaufnahme aufweist, was die Betriebskosten weiter erhöht.

Vor diesem Hintergrund ist es daher Aufgabe der vorliegenden Erfindung, eine Fußbodenheizung insbesondere für Tierställe mit Heizrohre aufweisenden Heizelementen zur Verfügung zu stellen, die einen reduzierten Montageaufwand und einen verbesserten Wirkungsgrad aufweist.

Gelöst wird diese Aufgabe durch die Merkmale des kennzeichnenden Teiles des Anspruchs 1.

Damit ist eine besonders einfache Montage mit reduziertem Aufwand möglich, in dem beispielsweise die aus Kunststoff bestehenden Heizrohre am vorgesehenen Einbauort von einer Rolle abgewickelt und im vorgesehenen Verlegungsmuster verlegt werden und anschließend die plattenförmigen Elemente so verlegt werden, daß die Heizrohre in den auf der Unterseite der plattenförmigen Elemente angeordneten Ausnehmungen aufgenommen und geführt werden. Auf diese Weise läßt sich einfach eine Fußbodenheizung mit Heizrohre aufweisenden Heizelementen zusammenfügen, da die plattenförmigen Elemente lediglich aneinandergelegt werden müssen und mit den in ihren auf der Unterseite angeordneten Ausnehmungen aufgenommenen und geführten Heizrohren die Heizelemente bilden. Eine aufwendige Verbindung der Heizelemente durch Verbinden der einzelnen Heizrohre mit Anschlußfittings entfällt, was zum einen den Montageaufwand deutlich reduziert und zum anderen auch den Wirkungsgrad der Fußbodenheizung im Betrieb verbessert. Die Verbesserung des Wirkungsgrades resultiert aus der Tatsache, daß die Vielzahl von in Reihe geschalteten Anschlußfittings entfallen, welche den Strömungswiderstand erhöhen und damit das Strömungsverhalten des Heizungswassers negativ beeinflussen. Anschlußfittings sind hier lediglich noch zum Anschließen des Heizrohres an die Zu- bzw. Abläufe erforderlich.

Eine derartig ausgebildete Fußbodenheizung läßt sich überall verlegen, beispielsweise auf einer auf einem Rohfußboden ausgelegten Isolierschicht. Bei Verwendung von Kunststoffrohren werden diese dann beispielsweise am vorgesehenen Verlegeort von einer Rolle abgerollt und im vorgesehenen Anordnungsmuster verlegt. Die Abdeckplatten werden dann anschließend so verlegt, daß die Ausnehmungen auf ihrer Unterseite die verlegten Heizrohre aufnehmen und führen. Vorteilhafterweise entspricht hier die Anordnung der Ausnehmungen auf der Unterseite der Abdeckplatten dem Verlegemuster der Heizrohre, so daß die Abdeckplatten einfach aufgesetzt werden und die Heizrohre dann im Verlegemuster fixieren. Der Rest des Fußbodens kann dann durch Verlegen weiterer Platten gebildet werden, aber auch in herkömmlicher Weise durch Verlegen von Estrich-Beton.

Besonders vorteilhaft ist jedoch die Verwendung der erfindungsgemäßen Fußbodenheizung mit Heizrohre aufweisenden Heizelementen in einem Tierstall, insbesondere einem Schweinestall, wenn gemäß einer bevorzugten Ausführungsform die plattenförmigen Elemente Teil eines freitragenden, über einem Hohlraum angeordneten Boden mit Öffnungen sind, die den Hohlraum mit dem über dem Boden liegenden Raum verbinden, und die Ausnehmungen mit den Heizrohren zum Hohlraum hin offen sind.

Der oben beschriebene Vorteil des reduzierten Montageaufwandes und des verbesserten Wirkungsgrades wird hier weiter gesteigert, da zusätzliche Raumheizelemente entfallen, um den Stall auf die für die Tiere erforderliche Raumtemperatur zu heizen. Die Heizung des Stalles kann hier alleine über die Heizrohre aufweisenden Heizelemente der Fußbodenheizung erfolgen, da die Heizrohre nach unten offen, d. h. nicht isoliert liegen und somit Wärme an die im Hohlraum befindliche Luft abgeben können. Diese steigt nach der Erwärmung durch die Heizrohre aufgrund der natürlichen Konvektion durch die Öffnungen im Boden in den darüber liegenden Stallraum und heizt diesen folglich auf. Damit können zum einen die zusätzlichen Raumheizkörper weggelassen werden, was den Materialaufwand und den Montageaufwand reduziert und in Folge die Baukosten. Zum anderen bleibt die Funktion des allgemein als "Laufrost" bezeichneten perforierten Bodens erhalten, der die Exkremente der Schweine in die darunter liegenden Güllekanäle leiten soll, da nur wenige Heizelemente zur Heizung des Stalles erforderlich sind und damit der größte Teil des Bodens perforiert ausgeführt werden kann. Schließlich wird auch durch den Wegfall der zusätzlichen Raumheizkörper der Wirkungsgrad der Heizungsanlage weiter verbessert, da die zu heizende und umzupumpende Wassermenge deutlich reduziert wird.

Vorteilhaft ist es hierbei, wenn die Heizrohre auf den Unterzügen aufliegen, die den perforierten Boden bzw. den "Laufrost" über den Güllekanälen tragen. Damit entfallen zusätzliche und aufwendige Auflagemittel für die Heizrohre, die in den auf der Unterseite der plattenförmigen Elemente ausgebildeten Ausnehmungen geführt und aufgenommen werden, in diesen aber nach unten hin freiliegen und folglich durch die plattenförmigen Elemente nach unten hin nicht gehalten werden. Die plattenförmigen Elemente decken die Heizrohre lediglich nach oben hin ab und führen sie seitlich, dienen also im wesentlichen als Abdeckplatte. Durch Nutzen der Unterzüge als Auflage für die Heizrohre lassen sich somit zum einen der Montageaufwand und damit die Montagekosten weiter reduzieren, zum anderen wird auch der Materialaufwand deutlich reduziert. Zudem liegen die Heizrohre zwischen den benachbarten Unterzügen mit einer ausreichenden Rohrlänge frei nach unten, so daß ein ausreichender Wärmeübergang von den Heizrohren an die im Hohlraum vorhandene Luft möglich ist, die nachfolgend durch Konvektion den darüberliegenden Stallraum heizt.

Sollte es beispielsweise wegen des vorgesehenen Verlegemusters der Heizschlange oder der notwendigen Anordnung des Heizelementes nicht möglich sein, die Heizrohre auf den Unterzügen aufliegend zu verlegen, so können vorteilhaft zusätzliche Tragbügel verwendet werden, die am vorgesehen Einbauort des Heizelementes zwischen benachbarten Unterzügen eingehängt werden. Die Heizrohre können dann zwischen den Unterzügen auch parallel zu diesen verlegt werden, so daß grundsätzlich jedes Verlegemuster von Heizschlangen möglich ist. Die Heizrohre können dann hier ebenfalls, wie oben ausführlich beschrieben, von einer Rolle abgewickelt und im vorgesehen Verlegungsmuster verlegt werden. Anschließend werden dann die plattenförmigen Elemente so verlegt, daß die Heizrohre in den auf der Unterseite der plattenförmigen Elemente angeordneten Ausnehmungen aufgenommen und geführt werden. Es ist jedoch auch möglich, die Heizrohre im vorgesehen Verlegungsmuster zu verlegen und durch Niederhalter auf den Tragbügeln zu befestigen, die beispielsweise in bekannter Weise als Clipse ausgebildet sein können, vor die plattenförmigen Elemente so verlegt werden, daß die Heizrohre in den auf der Unterseite der plattenförmigen Elemente angeordneten Ausnehmungen aufgenommen werden. Dieses vereinfacht etwas das Auflegen der Abdeckplatten, da die Heizrohre beispielsweise nicht mehr manuell im vorgesehen Verlegungsmuster gehalten werden müssen, damit sie beim Aufsetzen der Abdeckplatte in die Ausnehmung auf der Unterseite gelangen. Auch hier sind die Heizrohre in den Ausnehmungen der Abdeckplatte nach unten offen geführt und werden lediglich durch die Tragbügel nach unten gehalten, so daß sie im wesentlichen auf ihrer gesamten Länge nach unten offen sind und folglich Wärme an die unter den Tragplatten befindliche Luft geben können. Die Erwärmung des Stalles erfolgt dann auch hier in der schon oben ausführlich beschriebenen Weise mittels natürlicher Konvektion.

Die plattenförmigen Elemente können aus jedem beliebigen Material bestehen, welches zur Ausbildung von festen Platten geeignet ist und die bei einer Verwendung im Zusammenhang mit einer Fußbodenheizung erforderliche Wärmebeständigkeit aufweist. Bevorzugt sind die plattenförmigen Elemente jedoch aus Polymerbeton ausgebildet, da damit unter anderem eine besonders einfache Herstellung der plattenförmigen Elemente mit den Ausnehmungen auf der Unterseite in der gewünschten Ausbildung und im erforderlichen Anordnungsmuster möglich ist. Weiterhin werden damit robuste und belastbare plattenförmige Elemente zum Abdecken der Heizrohre und des unter dem "Laufrost" angeordneten Hohlraums bereitgestellt.

Damit die Rutschgefahr für die Schweine auf der unter Umständen durch Exkremente verunreinigten Oberfläche der plattenförmigen Elemente reduziert wird, ist die Oberfläche in vorteilhafter Weise nicht glatt ausgeführt, sondern weist eine Struktur auf. Diese kann beliebig ausgebildet sein, sofern die gewählte Struktur den Reibbeiwert der Oberfläche des plattenförmigen Elementes erhöht und damit die Rutschgefahr für die Schweine auch bei verschmutzter Oberfläche reduziert.

Die plattenförmigen Elemente können in ihren äußeren Abmessungen und in ihrer äußeren Form beliebig gestaltet werden und damit an unterschiedlichste vorgegebene Einbaugeometrien angepaßt werden. Bevorzugt werden sie jedoch im wesentlichen rechteckig ausgebildet, da damit eine besonders einfache Verlegung möglich. ist. Wenn dann noch gemäß einer vorteilhaften Ausgestaltung mehrere Ausnehmungen parallel nebeneinanderliegend und im wesentlichen geradlinig auf der Unterseite des plattenförmigen Elementes ausgebildet sind, kann ein Heizelement bevorzugt aus mehreren plattenförmigen Elementen so zusammengesetzt sein, daß die Ausnehmungen auf der Unterseite jeder Platte mit ihrem zur Seite des plattenförmigen Elementes gerichteten Querschnittsöffnungen jeweils fluchtend aneinander anstoßen. Damit ist es möglich, eine dem Verlegemuster der erforderlichen Heizschlange entsprechende Anordnung der Ausnehmungen auf der Unterseite der plattenförmigen Elemente vorzusehen, so daß diese nach dem Auslegen die Heizrohre sicher aufnehmen und zuverlässig die Heizschlange in der erforderlichen Form führen.

Ein Verfahren zur Herstellung einer Fußbodenheizung mit mindestens einem Heizrohre aufweisenden Heizelement, als Teil eines Bodens insbesondere für einen Tierstall, bei dem der Boden von Unterzügen getragen, freitragend über Güllekanäle angeordnet ist und Öffnungen aufweist, durch die die Exkremente der Tiere in die Güllekanäle gelangen, weist vorteilhafterweise die Verfahrensschritte auf:
- Verlegen der Heizrohre in dem für das mindestens eine Heizelement vorgesehenen Bereich, so daß sie auf den Unterzügen aufliegen,
- Ausrichten der Heizrohre, so daß ihre Anordnung der Anordnung der Ausnehmungen in der Unterseite der plattenförmigen Elemente entspricht,
- Aufsetzen der plattenförmigen Elemente auf die die Heizrohre tragenden Unterzüge.

Damit läßt sich einfach und ohne großen Aufwand die erfindungsgemäße Fußbodenheizung herstellen wobei die Heizrohre vorteilhafterweise aus Kunststoff bestehen und am vorgesehenen Einbauort von einer Rolle abgewickelt werden und anschließend bevorzugt mit einer Schablone ausgerichtet werden, so daß die plattenförmigen Elemente nur noch aufgesetzt zu werden brauchen. Die Heizrohre können dabei vor dem Aufsetzen der plattenförmigen Elemente oder danach an die Zu- und Ableitungen des Heizkreislaufes angeschlossen werden.

Werden die Heizrohre auf zwischen den Unterzügen angeordneten Tragbügeln aufliegend verlegt, so weist das Verfahren vorteilhafterweise die folgenden Verfahrensschritte auf:
- Verlegen der Tragbügel in dem für das mindestens eine Heizelement vorgesehenen Bereich, so daß sie mit ihren Enden jeweils auf benachbarten Unterzügen aufliegen,
- Verlegen der Heizrohre, so daß sie auf den Tragbügeln aufliegen,
- Ausrichten der Heizrohre, so daß ihre Anordnung der Anordnung der Ausnehmungen in der Unterseite der plattenförmigen Elemente entspricht,
- Aufsetzen der plattenförmigen Elemente auf die die Heizrohre tragenden Tragbügel.

Bei Verwendung von Niederhaltern zur Befestigung der Heizrohre auf den Tragbügeln können diese vorteilhaft nach dem Ausrichten der Heizrohre angebracht werden.

Die Erfindung wird nun nachfolgend unter Bezugnahme auf die beigefügte Zeichnung näher erläutert. Dabei zeigen:
- Fig. 1: eine Draufsicht auf die in einem Laufrost integrierte Fußbodenheizung, wobei die linke Zeichnungshälfte die Fußbodenheizung mit entfernten Abdeckplatten zeigt,
- Fig. 2: einen Schnitt durch eine verlegte Abdeckplatte der Fig. 1,
- Fig. 3: eine Ansicht einer Abdeckplatte von unten,
- Fig. 4: eine Seitenansicht der Abdeckplatte der Fig. 3,
- Fig. 5: einen Schnitt durch die Abdeckplatte der Fig. 3 entlang der Linie V-V,
- Fig. 6: eine Ansicht einer Abschlußplatte von unten,
- Fig. 7: einen Schnitt durch die Abschlußplatte der Fig. 6 entlang der Linie VII-VII,
- Fig. 8: einen Schnitt durch zwei auf Tragbügeln aufliegende Abdeckplatten, und
- Fig. 9: einen Schnitt wie in Fig. 8, jedoch ohne Abdeckplatten, wobei die Heizrohre mittels Niederhalter auf den Tragbügeln befestigt sind.

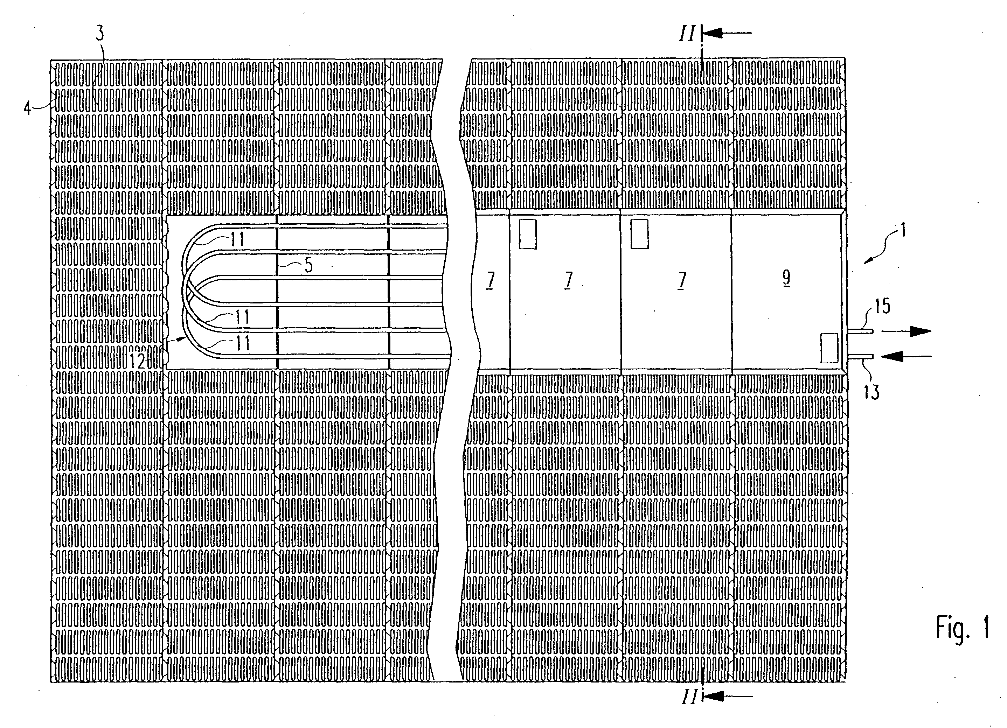

In Fig. 1 ist ein Stallboden für einen Schweinestall in einer Draufsicht dargestellt. Der Stallboden besteht aus einem im folgenden als "Laufrost" bezeichneten perforierten Boden 3 und einer Fußbodenheizung mit einem Heizelement 1. Die Perforation wird hier aus einer Vielzahl von parallel angeordneten Langlöchern 4 im Laufrost 3 gebildet. Der Laufrost 3 ist aus Segmenten zusammengesetzt und wird von Unterzügen 5 freitragend über einem nicht dargestellten Güllekanal gehalten. Im Laufrost 3 ist ein Bereich für das Heizelement 1 vorgesehen. In diesem Bereich liegt eine Heizschlange 12 mit Heizrohren 11 in dem vorgesehenen Verlegemuster auf den Unterzügen 5 auf und wird von Abdeckplatten 7 sowie einer Abschlußplatte 9 abgedeckt. Die Heizrohre 11 der Heizschlange 12 sind an einen Zulauf 13 sowie an einen Ablauf 15 angeschlossen, der die Heizschlange 12 mit einem nicht dargestellten Heizkreislauf verbindet. Aus Gründen der Übersichtlichkeit ist der mittlere Bereich des Stallbodens nicht dargestellt und der linke Bereich des Stallbodens zum besseren Verständnis ohne Abdeckplatten 7 sowie Abschlußplatte 9 dargestellt.

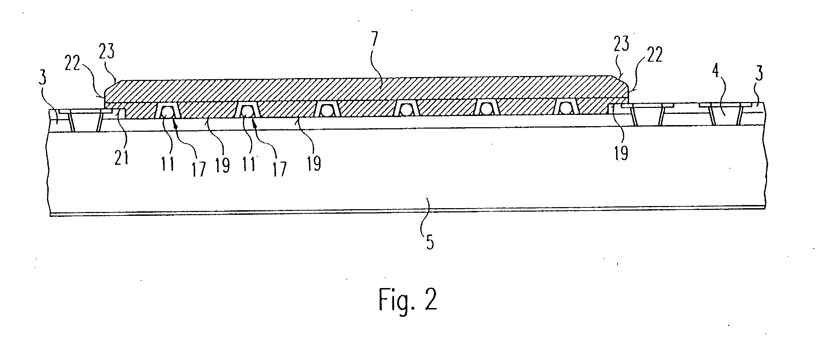

Wie am besten Fig. 2 zu entnehmen ist, welche einen Schnitt durch den Stallboden der Fig. 1 entlang der Linie II-II darstellt, weisen die Abdeckplatten 7 an ihrer Unterseite Ausnehmungen 17 auf, in welchen die Heizrohre 11 aufgenommen und geführt werden, wobei die Ausnehmungen 17 mit den Heizrohren 11 nach unten hin offen sind. Ebenso wie die Heizrohre 11 liegen auch die Abdeckplatten 7 auf den Unterzügen 5 auf und werden von diesen getragen. Die Abdeckplatte 7 weist dazu erste Auflagebereiche 19 auf, mit denen sie auf dem Unterzug 5 aufliegt. Mit ihren Seitenrändern 22 ragt die Abdeckplatte 7 etwas über das Laufrost 3, wobei sie hier mit einem zweiten Auflagebereich 21 auf dem Laufrost 3 aufliegt. Weiter weisen die Seitenränder 22 abgeschrägte Kanten 23 auf, um den Übergang vom Laufrost 3 auf die Abdeckplatte 7 etwas sanfter zu gestalten.

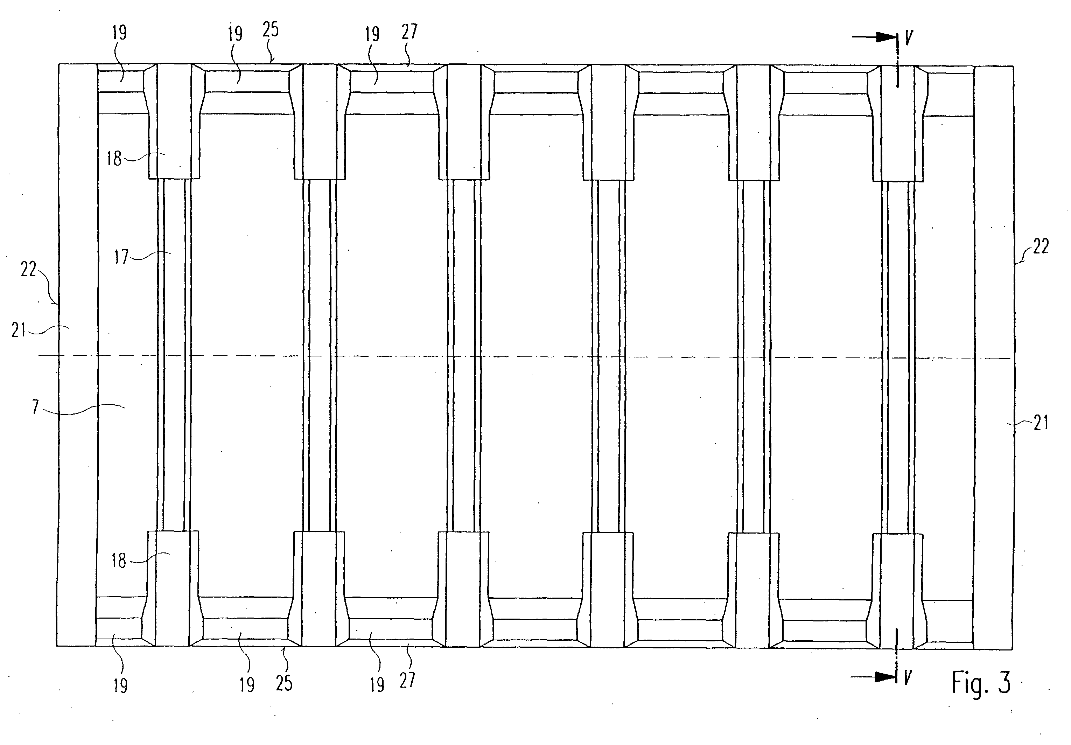

Wie am besten der Fig. 3 zu entnehmen ist, die eine Ansicht der Abdeckplatte 7 von unten zeigt, sind die Ausnehmungen 17 hier geradlinig und parallel zueinander angeordnet, wobei hier anzumerken ist, daß die Anordnung der Ausnehmungen 17 auch beliebig anders vorgesehen werden kann, je nach dem erforderlichen Verlegemuster der jeweiligen Heizschlange. Entlang der Seitenränder 25 ist jeweils ein Wulst 27 vorgesehen, der von den Endbereichen 18 der Ausnehmungen 17 unterbrochen wird und die ersten Auflagebereiche 19 aufweist. Mit diesen Auflagebereichen 19 liegt die Abdeckplatte 7 auf den Unterzügen 5 auf. Mit den Seitenrändern 22 ragt die Abdeckplatte 7 etwas über das Laufrost 3 und liegt dort mit ihren zweiten Auflagebereichen 21 auf, die unter Bezugnahme auf die Fig. 2 erläutert wurden.

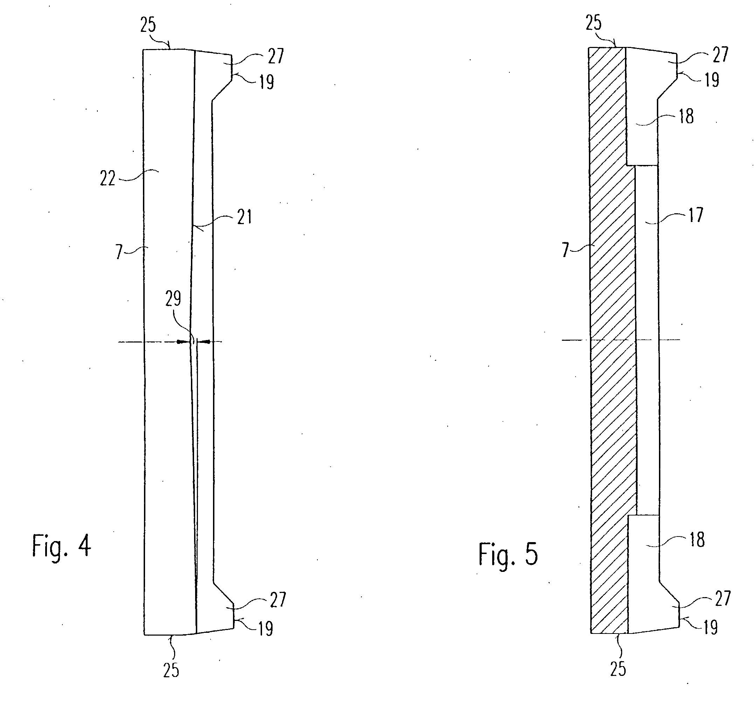

Wie am besten Fig. 4 zu entnehmen ist, die eine Seitenansicht des Seitenrandes 22 zeigt, ist der zweite Auflagebereich 21 zur Mitte hin etwas ansteigend ausgebildet, so daß er bei aufgesetzter Abdeckplatte 7 in der Mitte einen Abstand 29 zum Laufrost 3 aufweist, so daß die Anbringung eines Werkzeuges zur Aufnahme der Abdeckplatte 7 ermöglicht wird. Gleichzeitig ist der Fig. 4 gut zu entnehmen, daß die entlang der Seitenränder 25 ausgebildeten Wulste 27 mit ihren ersten Auflagebereichen 19 von der Unterseite der Abdeckplatte 7 hervorstehen.

Dieses ist ebenfalls der Fig. 5 zu entnehmen, die einen Schnitt durch die Abdeckplatte 7 entlang der Linie V-V in Fig. 3 zeigt. Hier ist gut zu sehen, daß die Ausnehmung 17 Endbereiche 18 aufweist, die gegenüber der Ausnehmung 17 etwas vergrößert sind.

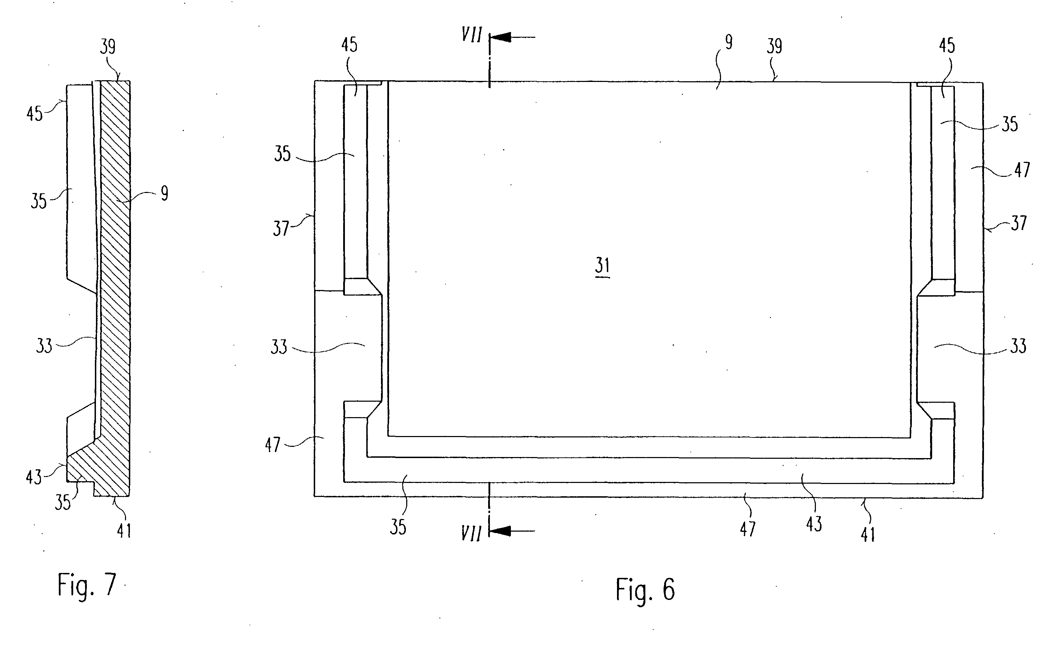

Die hier beschriebenen Abdeckplatten 7 werden in der in Fig. 1 gezeigten Weise zu einer Fußbodenheizung bzw. als Heizleiste ausgebildeten Heizelement 1 zusammengesetzt, indem sie mit ihren ersten Auflagebereichen 19 auf die Unterzüge 5 aufgesetzt werden, so daß die benachbart angeordneten Abdeckplatten 7 jeweils mit ihren Seitenrändern 22 aneinander anstoßen. Die Ausnehmungen 17 liegen dann jeweils mit ihren Endbereichen 18 fluchtend aneinander an und bilden so eine die Heizleiste 1 durchziehende Führung und Aufnahme für die Heizrohre 11 der Heizschlange 12. Die Heizrohre 11 liegen dabei ebenfalls auf den Unterzügen 5 auf, während der zwischen den Unterzügen 5 angeordnete Bereich der Heizrohre 11 in den Ausnehmungen 17 der Abdeckplatten 7 geführt und nach unten hin frei ist. Dadurch können die Heizrohre 11 Wärme an die unter ihnen befindliche Luft abgeben, um in der weiter oben ausführlich beschriebenen Weise den Stallraum über dem Laufrost 3 zu heizen. Wie ebenfalls der Fig. 1 zu entnehmen ist, sind die Endbereiche der Heizleiste 1 jeweils durch eine Abschlußplatte 9 abgedeckt. Diese nimmt die in Fig. 1 zu sehenden Bögen der Heizschlange 12 auf und weist hierzu eine Ausnehmung 31 auf, wie der Fig. 6 zu entnehmen ist.

Fig. 6 zeigt eine Ansicht der Abschlußplatte 9 von unten. Die Abschlußplatte 9 weist an ihrer Unterseite einen Wulst 35 auf, der von der Unterseite hervorsteht und im wesentlichen entlang der Seitenränder 37 sowie des Seitenrandes 41 geführt ist. Entlang des Seitenrandes 39 ist kein Wulst geführt, so daß die durch den Wulst 35 begrenzte Ausnehmung 31 zum Seitenrand 39 hin offen ist, ebenso wie nach unten.

Dieses ist gut der Fig. 7 zu entnehmen, die einen Schnitt durch die Abschlußplatte 9 entlang der Linie VII-VII in Fig. 6 zeigt. Hier ist ebenfalls gut die Aussparung 33 zu sehen, die im Wulst 35 jeweils entlang der Seitenränder 37 angeordnet ist. Durch diese Aussparungen 33 können die Zu- und Ableitungen der Heizschlange 12 geführt werden. Mit dem Seitenrand 39 liegt die Abschlußplatte 9 an der benachbarten Abdeckplatte 7 an und bildet so den Abschluß der Heizleiste 1. Da die Ausnehmung 31 zur Abdeckplatte 7 hin offen ist, nimmt sie die von dort herangeführten Heizrohre 11 auf, die in dem durch die Abschlußplatte 9 abgedeckten Bereich gebogen sind. Die Heizrohre 11 können hierbei in einem beliebigen Radius gebogen sein, da die Ausnehmung 31 an der Unterseite der Abschlußplatte 9 nahezu über die gesamte Abschlußplatte 9 reicht. Die Unterseite des entlang des Seitenrandes 41 geführten Wulstes 35 bildet einen ersten Auflagebereich 43, mit dem die Abschlußplatte 9 auf einem Unterzug 5 aufliegt. Ebenso liegt die Abschlußplatte 9 mit zweiten Auflagebereichen 45, die jeweils an den zum Seitenrand 39 weisenden Enden des entlang der Seitenränder 37 ausgebildeten Wulstes 35 angeordnet sind auf einem Unterzug auf. So wie die Abdeckplatte 7 ragt die Abschlußplatte 9 etwas über das Laufrost 3 und liegt hier mit dritten Auflagebereichen 47, die entlang der Seitenränder 37 auf deren Unterseite ausgebildet sind, auf dem Laufrost auf. Der dritte Auflagebereich 47 kann noch weiterführend entlang des Seitenrandes 41 auf dessen Unterseite ausgebildet sein.

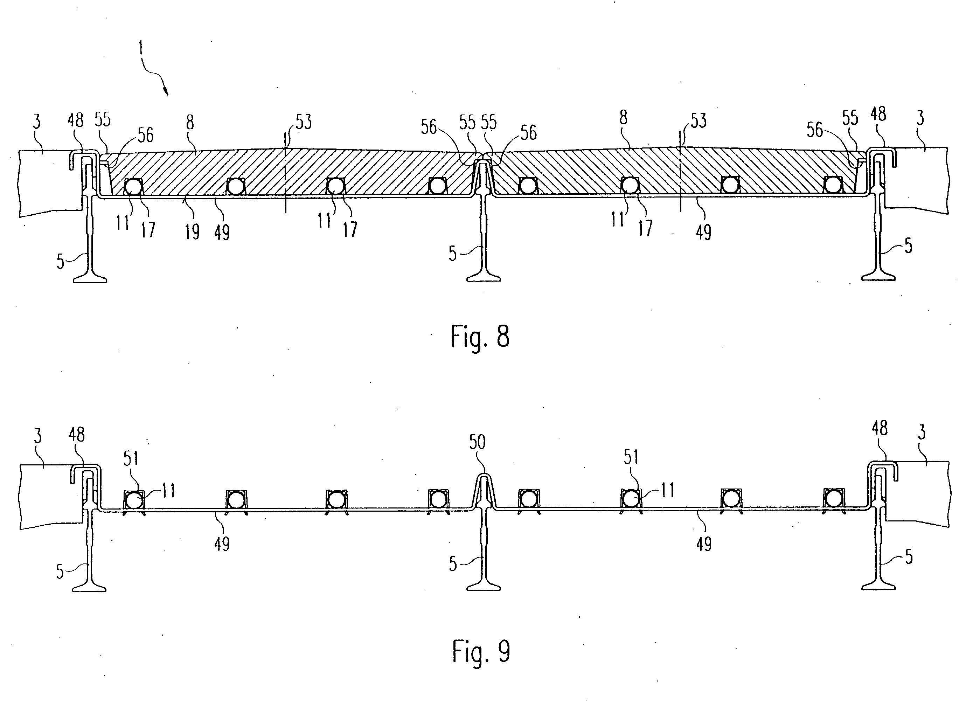

Wenn die Heizrohre 11 wegen des vorgesehen Verlegemusters der Heizschlange 12 oder der erforderlichen Einbaulage des Heizelementes 1 nicht auf den Unterzügen 5 aufliegend verlegt werden können, so werden Tragbügel 49 verwendet, wie in Fig. 8 und 9 dargestellt. In Fig. 8 ist ein Schnitt durch zwei Abdeckplatten 8 als Teil eines Heizelementes 1 dargestellt. Die Abdeckplatten 8 sind bis auf einige kleine, nachfolgend erläuterte Abweichungen wie die Abdeckplatten 7 ausgebildet, so daß übereinstimmende Bereiche mit den gleichen Bezugszeichen versehen sind. Die Abdeckplatten 8 liegen mit ersten Auflagebereichen 19 auf den Tragbügeln 49 auf und weisen an ihrer Unterseite Ausnehmungen 17 auf, die in der unter Bezugnahme auf die Abdeckplatte 7 ausführlich beschriebenen Weise ausgebildet sind und Heizrohre 11 aufnehmen und führen. Die Abdeckplatten 8 sind in der Mitte mit einer leichten Erhöhung 53 ausgebildet, so daß sie zu den Seitenrändern 55 hin sanft abfallen. Entlang des Seitenrandes 55 sind an dessen Unterseite zweite Auflagebereiche 56 ausgebildet, mit denen die Abdeckplatte 8 auf den Unterzügen 5 bzw. auf den dort aufliegenden Enden 50 der Tragbügel 49 aufliegt, wie in der Mitte der Fig. 8 dargestellt. Das Ende 50 der Tragbügel 49 ist hier so ausgebildet, daß es auf der Oberseite der Unterzüge aufliegt und die Oberseite umgreift. Das andere Ende 48 des Tragbügels 59 ist hier so ausgebildet, daß es auf dem Laufrost 3 aufliegt und in diesen eingreift, welcher wiederum auf dem Unterzug 5 aufliegt. Da hierzu das Ende 48 des Tragbügels 49 höher ausgebildet ist als das Ende 50 des Tragbügels 49, liegt hier die Abdeckplatte 8 nicht mit ihrem zweiten Auflagebereich 56 auf dem Ende 48 des Tragbügels 49 auf, sondern stößt an diesen an. Auf diese Weise wird eine einheitliche, durchgehende Oberfläche vom Laufrost 3 zum Heizelement 1 geschaffen, die keine Stufe beim Übergang vom Laufrost 3 zum Heizelement 1 aufweist.

In Fig. 9 ist eine Anordnung von Tragbügel 49 ohne Abdeckplatten 8 dargestellt, bei der die Heizrohre 11 durch Niederhalter 51 auf dem Tragbügel 49 befestigt sind. Die Anordnung entspricht der unter Bezugnahme auf die Figur beschriebenen, so daß auf eine erneute ausführliche Beschreibung verzichtet werden kann. Der Unterschied besteht hier in der Verwendung von als Clipse ausgebildete Niederhalter 51, mit denen die Heizrohre 11 auf dem Tragbügel 49 festgeklemmt werden. Die Niederhalter 51 sind in bekannter Weise ausgebildet und erleichtern das Auflegen der Abdeckplatte 8, da sie die Heizrohre 11 im vorgesehenen Verlegemuster fixieren. Ein manuelles Fixieren der Heizrohre 11, damit diese in die Ausnehmung 17 auf der Unterseite der Abdeckplatten 8 gelangen, ist somit nicht mehr erforderlich.

### Bezugszeichenliste

- 1: Fußbodenheizung
- 3: Laufrost
- 4: Perforation
- 5: Unterzüge
- 7: Abdeckplatte
- 8: Abdeckplatte
- 9: Abschlußplatte
- 11: Heizrohre
- 12: Heizschlange
- 13: Zulauf
- 15: Ablauf
- 17: Ausnehmung
- 18: Endbereich
- 19: erster Auflagebereich
- 21: zweiter Auflagebereich
- 22: Seitenrand
- 23: Kante
- 25: Seitenrand
- 27: Wulst
- 29: Abstand
- 31: Ausnehmung
- 33: Aussparung
- 35: Wulst
- 37: Seitenrand
- 39: Seitenrand
- 41: Seitenrand
- 43: erster Auflagebereich
- 45: zweiter Auflagebereich
- 47: dritter Auflagebereich
- 48: Tragbügelende
- 49: Tragbügel
- 50: Tragbügelende
- 51: Niederhalter
- 53: Erhöhung
- 55: Seitenrand
- 56: zweiter Auflagebereich

## Patentansprüche

1. Fußbodenheizung für Tierställe mit mindestens einem Heizrohre aufweisenden, plattenförmigen Heizelement, das Teil eines frei tragenden, mittels Unterzügen (5) über einem Hohlraum angeordneten Bodens (3) mit Öffnungen (4) ist, die den Hohlraum mit dem über dem Boden liegenden Raum verbinden,
**dadurch gekennzeichnet, daß**
das Heizelement aus mindestens einem plattenförmigen Element (7) aus Polymerbeton besteht, auf dessen Unterseite Ausnehmungen (17) zur Führung und Aufnahme der Heizrohre (11) ausgebildet sind, wobei die Ausnehmungen (17) mit den Heizrohren (11) zum Hohlraum hin offen sind.

2. Fußbodenheizung nach Anspruch 1,
**dadurch gekennzeichnet, daß**
die Heizrohre (11) im wesentlichen direkt auf den Unterzügen (5) aufliegen.

3. Fußbodenheizung nach Anspruch 1,
**dadurch gekennzeichnet, daß**
die Heizrohre (11) auf Tragbügeln (49) aufliegen, die zwischen benachbarten Unterzügen (5) angeordnet sind und mit ihren Enden (48, 49) jeweils im wesentlichen auf den Unterzügen (5) aufliegen.

4. Fußbodenheizung nach Anspruch 3,
**dadurch gekennzeichnet, daß**
die Heizrohre (11) mit Niederhaltern (51) auf den Tragbügeln (49) befestigt sind.

5. Fußbodenheizung nach einem der vorhergehenden Ansprüche,
**dadurch gekennzeichnet, daß**
das mindestens eine plattenförmige Element (7) auf seiner Oberfläche eine Struktur zur Erhöhung der Trittsicherheit aufweist.

6. Fußbodenheizung nach einem der vorhergehenden Ansprüche,
**dadurch gekennzeichnet, daß**
das mindestens eine plattenförmige Element (7) im wesentlichen rechteckig ist.

7. Fußbodenheizung nach einem der vorhergehenden Ansprüche,
**dadurch gekennzeichnet, daß**
mehrere Ausnehmungen (17) parallel nebeneinanderliegend und im wesentlichen geradlinig auf der Unterseite des mindestens einen plattenförmigen Elementes (7) ausgebildet sind.

8. Fußbodenheizung nach Anspruch 6,
**gekennzeichnet durch**
mindestens ein aus mehreren plattenförmigen Elementen (7) zusammengesetztes Heizelement (1), wobei die plattenförmigen Elemente (7) so zusammengesetzt sind, daß die Ausnehmung (17) auf der Unterseite jeder Platte (7) mit ihrer zur Seite (22) des plattenförmigen Elementes (7) gerichteten Querschnittsöffnung jeweils fluchtend aneinander anstoßen.

9. Verfahren zur Herstellung einer Fußbodenheizung nach einem der vorhergehenden Ansprüche, bei dem der Boden von Unterzügen getragen freitragend über Güllekanälen angeordnet ist und Öffnungen aufweist, durch die die Exkremente der Tiere in die Güllekanäle gelangen, aufweisend die Verfahrensschritte:
- Verlegen der Heizrohre (11) in einem für das mindestens eine Heizelement (1) vorgesehenen Bereich, so daß sie auf den Unterzügen (5) aufliegen,
- Ausrichten der Heizrohre (11), so daß ihre Anordnung der Anordnung von Ausnehmungen (17) in der Unterseite der plattenförmigen Elemente (7) entspricht,
- Aufsetzen der plattenförmigen Elemente (7) auf die die Heizrohre (11) tragenden Unterzüge (5).

10. Verfahren nach Anspruch 9,
**dadurch gekennzeichnet, daß**
die Heizrohre (11) mit einer Schablone ausgerichtet werden.

11. Verfahren zur Herstellung einer Fußbodenheizung nach einem der vorhergehenden Ansprüche, bei dem der Boden von Unterzügen getragen freitragend über Güllekanälen angeordnet ist und Öffnungen aufweist, durch die Exkremente der Tiere in die Güllekanäle gelangen, aufweisend die Verfahrensschritte:
- Verlegen von Tragbügeln (49) in einem für das mindestens eine Heizelement (1) vorgesehenen Bereich, so daß sie mit ihren Enden (48, 50) jeweils im wesentlichen auf benachbarten Unterzügen (5) aufliegen,
- Verlegen der Heizrohre (11), so daß sie auf den Tragbügeln (49) aufliegen,
- Ausrichten der Heizrohre (11), so daß ihre Anordnung der Anordnung von Ausnehmungen (17) in der Unterseite der plattenförmigen Elemente (8) entspricht,
- Aufsetzen der plattenförmigen Elemente (8) auf die die Heizrohre (11) tragenden Tragbügel (49).

12. Verfahren nach Anspruch 11,
**dadurch gekennzeichnet, daß** die Heizrohre (11) durch Niederhalter (51) auf den Tragbügeln (49) befestigt werden.

## Claims

1. Underfloor heating for animal stalls having at least one plate-shaped heating element comprising heating tubes, which heating element constitutes part of a suspended floor (3) arranged above a cavity by means of joists (5), which floor (3) has openings (4) which connect the cavity with the space above the floor, **characterised in that** the heating element consists of at least one plate-shaped element (7) of concrete polymer, on the underside of which there are formed recesses (17) for guiding and accommodating the heating tubes (11), the recesses (17) with the heating tubes (11) being open towards the cavity.

2. Underfloor heating according to claim 1, **characterised in that** the heating tubes (11) lie substantially directly on the joists (5).

3. Underfloor heating according to claim 1, **characterised in that** the heating tubes (11) lie on carrying stirrups (49), which are arranged between neighbouring joists (5) and lie with their ends (48, 49) in each case substantially on the joists (5).

4. Underfloor heating according to claim 3, **characterised in that** the heating tubes (11) are attached to the carrying stirrups (49) by means of holding-down clamps (51).

5. Underfloor heating according to one of the preceding claims, **characterised in that** the at least one plate-shaped element (7) has a structure on its surface for increasing walk safety.

6. Underfloor heating according to one of the preceding claims, **characterised in that** the at least one plate-shaped element (7) is substantially rectangular.

7. Underfloor heating according to one of the preceding claims, **characterised in that** a plurality of recesses (17) are formed parallel next to one another and substantially in a straight line on the underside of the at least one plate-shaped element (7).

8. Underfloor heating according to claim 6, **characterised by** at least one heating element (1) composed of a plurality of plate-shaped elements (7), the plate-shaped elements (7) being so assembled that the recesses (17) on the underside of each plate (7) adjoin one another with their cross-sectional openings, which are oriented towards the side (22) of the plate-shaped element (7), aligned in each case.

9. A method of producing underfloor heating according to one of the preceding claims, in which the floor, supported by joists, is arranged in suspended manner above manure channels and comprises openings through which the animal excrement reaches the manure channels, comprising the method steps:
- laying of the heating tubes (11) in an area provided for the at least one heating element (1), such that they lie on the joists (5),
- alignment of the heating tubes (17), such that their arrangement corresponds to the arrangement of recesses (17) in the underside of the plate-shaped elements (7),
- placing of the plate-shaped elements (7) on the joists (5) carrying the heating tubes (11).

10. A method according to claim 9, **characterised in that** the heating tubes (11) are aligned with a template.

11. A method of producing underfloor heating according to one of the preceding claims, in which the floor, supported by joists, is arranged in suspended manner above manure channels and comprises openings through which the animal excrement reaches the manure channels, comprising the method steps:
- laying of carrying stirrups (49) in an area provided for the at least one heating element (1), such that they lie with their ends (48, 50) in each case substantially on neighbouring joists (5),
- laying of the heating tubes (11), such that they lie on the carrying stirrups (49),
- alignment of the heating tubes (17), such that their arrangement corresponds to the arrangement of recesses (17) in the underside of the plate-shaped elements (8),
- placing of the plate-shaped elements (8) on the carrying stirrups (49) carrying the heating tubes (11).

12. A method according to claim 11,
**characterised in that** the heating tubes (11) are attached to the carrying stirrups (49) by holding-down clamps (51).

## Revendications

1. Chauffage par le sol pour étables présentant au moins un élément chauffant en forme de plaque qui fait partie d'un sol (3) flottant disposé au moyen de supports (5) au-dessus d'un espace creux, comportant au moins un tube chauffant ayant des ouvertures (4) qui relient l'espace creux avec l'espace situé au-dessus du sol,
**caractérisé en ce que**,
l'élément chauffant est constitué d'au moins un élément (7) en forme de plaque en béton polymère, sur la face inférieure duquel sont formés des évidements (17) pour guider et recevoir les tubes chauffants (11), les évidements (17) avec tubes chauffants étant ouverts en direction de l'espace libre.

2. Chauffage par le sol selon la revendication 1,
**caractérisé en ce que**,
les tubes chauffants (11) reposent pour l'essentiel directement sur les supports (5).

3. Chauffage par le sol selon la revendication 1,
**caractérisé en ce que**,
les tubes chauffants (11) reposent sur des étriers porteurs (49), qui sont disposés entre des supports (5) voisins et reposent par leurs extrémités (48, 49) respectivement pour l'essentiel sur les supports (5).

4. Chauffage par le sol selon la revendication 3,
**caractérisé en ce que**,
les tubes chauffants (11) sont fixés sur les étriers porteurs (49) par des agrafes (51).

5. Chauffage par le sol selon l'une des revendications précédentes,
**caractérisé en ce que**,
au moins un élément (7) en forme de plaque présente sur sa surface supérieure une structure pour augmenter la stabilité à la marche.

6. Chauffage par le sol selon l'une des revendications précédentes,
**caractérisé en ce que**,
l'élément(7) en forme de plaque, au moins, est essentiellement rectangulaire.

7. Chauffage par le sol selon l'une des revendications précédentes,
**caractérisé en ce que**,
plusieurs évidements (17) sont réalisés parallèlement les uns à côté des autres et essentiellement de manière rectiligne sur la face inférieure de l'élément (7) en forme de plaque, au moins.

8. Chauffage par le sol selon la revendication 6,
**caractérisé par**
au moins un élément chauffant (1) composé de plusieurs éléments (7) en forme de plaque, les éléments (7) en forme de plaque étant combinés de manière telle, que les évidements (17) aboutent respectivement les uns aux autres en alignement, sur la face inférieure de chaque plaque (7) par leur ouverture de section transversale orientée vers le côté (22) de l'élément (7) en forme de plaque.

9. Procédé de fabrication d'un chauffage par le sol selon l'une des revendications précédentes, dans lequel le sol supporté par des supports est disposé flottant au-dessus de caniveaux à lisier et présente des ouvertures, par lesquelles les excréments des animaux parviennent dans les caniveaux à lisier, comportant les étapes de procédé suivantes :
- pose des tubes chauffants (11) dans une zone prévue pour l'élément chauffant (1), au moins, de manière à ce qu'ils reposent sur les supports (5),
- ajustage des tubes chauffants (11), de manière à ce que leur disposition corresponde à la disposition des évidements (17) dans la face inférieure des éléments (7) en forme de plaque,
- mise en place des éléments (7) en forme de plaque sur les supports (5) portant les tubes chauffants (11).

10. Procédé selon la revendication 9,
**caractérisé en ce que**,
les tubes chauffants (11) sont ajustés à l'aide d'un gabarit.

11. Procédé de fabrication d'un chauffage par le sol selon l'une des revendications précédentes, dans lequel le sol supporté par des supports est disposé flottant au-dessus de caniveaux à lisier et présente des ouvertures, par lesquelles les excréments des animaux parviennent dans les caniveaux à lisier, comportant les étapes de procédé suivantes :
- pose d'étriers porteurs (49) dans une zone prévue pour l'élément chauffant (1), au moins, de manière à ce qu'ils reposent par leurs extrémités (48, 50) respectivement pour l'essentiel sur des supports (5) voisins,
- pose des tubes chauffants (11) de manière à ce qu'ils reposent sur les étriers porteurs (49),
- ajustage des tubes chauffants (11), de manière à ce que leur disposition corresponde à la disposition des évidements (17) dans la face inférieure des éléments (8) en forme de plaque,
- mise en place des éléments (8) en forme de plaque, sur les étriers porteurs (49) portant les tubes chauffants (11).

12. Procédé selon la revendication 11,
**caractérisé en ce que**,
les tubes chauffants (11) sont fixés sur les étriers supports (49) par des agrafes (51).
